# EUROPÄISCHE PATENTSCHRIFT

(11) **EP 4 639 130 B1**
(45) Veröffentlichungstag und Bekanntmachung des Hinweises auf die Patenterteilung: **20.05.2026**
(21) Anmeldenummer: 25714023.6
(22) Anmeldetag: 13.02.2025
(51) Int. Cl.: G01M 13/025, F16F 15/02, G01M 17/007, G01M 17/04

(54) **PRÜFVORRICHTUNG MIT SCHWINGUNGSENTKOPPELTER LAGERUNG**
TEST DEVICE WITH VIBRATION-DECOUPLED SUPPORT
DISPOSITIF D'ESSAI MONTÉ DE MANIÈRE DÉCOUPLÉE DES VIBRATIONS

(30) Priorität: 14.02.2024 AT 501122024
(43) Veröffentlichungstag der Anmeldung: 29.10.2025
(73) Patentinhaber: AVL List GmbH, 8020 Graz (AT)
(72) Erfinder: SEEWALD, Georg, 8054 Graz (AT)
(86) Internationale Anmeldenummer: PCT/AT2025/060051
(87) Internationale Veröffentlichungsnummer: WO 2025/171425

(56) Entgegenhaltungen:
- EP-B1- 3 325 937
- GB-A- 1 360 511
- JP-A- 2013 180 596

## Beschreibung

Die vorliegende Erfindung betrifft eine Prüfvorrichtung für einen Fahrzeugprüfstand, einen Fahrzeugprüfstand mit einer solchen Prüfvorrichtung und ein Verfahren zum Betreiben eines solchen Fahrzeugprüfstands.

Die vorliegende Erfindung beruht auf der bekannten Schwingungsentkopplung für Prüfvorrichtungen für Fahrzeugprüfstände.

Im Stand der Technik sind verschiedene Prüfvorrichtungen und Aufhängungs- bzw. Befestigungslösungen bekannt.

Aus EP 3 325 937 B1 ist eine Prüfvorrichtung für einen Fahrzeugprüfstand mit Basisrahmen, elektrischer Belastungsmaschine und Grundplatte bekannt; eine zwischen Basisrahmen und Grundplatte auf gegenüberliegenden Seiten der Lastachse angeordnete Dämpfungsanordnung, deren Verbindungslinie die Lastachse schneidet, ist dort nicht offenbart. JP 2013-180596 A betrifft die vibrationsoptimierte Befestigung elektrischer Einheiten an einer Fahrzeugkarosserie und zeigt keine Prüfvorrichtung eines Fahrzeugprüfstands. GB 1 360 511 A beschreibt die Aufhängung eines Drehmoment-Dynamometers mittels Lenkerfedern; eine achsbezogene Dämpfungsanordnung zwischen Basisrahmen und Grundplatte eines Prüfstands wird nicht offenbart.

Es ist bekannt, dass Fahrzeugprüfstände in Gebäuden aus einer Basisplatte bestehen, auf denen üblicherweise ein oder mehrere Prüfvorrichtungen, üblicherweise Dynamometer, und ein zu prüfendes Prüffahrzeug angeordnet sind. Während eines Prüfvorgangs ist das Fahrzeug mit einer oder mehrerer seiner Achsen an den Prüfvorrichtungen gekoppelt und wird unter verschiedenen Bedingungen betrieben. Beim Betrieb des Fahrzeugs werden Schwingungen verschiedener Frequenzen an den Prüfvorrichtungen erzeugt. Ohne eine Dämpfung werden diese Schwingungen auf das Gebäude, in dem sich der Prüfstand befindet, übertragen. Eine dauerhafte Belastung des Gebäudes durch Schwingungen kann zu Schädigungen der Gebäudestruktur führen. Ein häufig noch größeres Problem besteht in der Lärmbelastung, der die in dem Gebäude arbeitenden Personen ausgesetzt sind.

Um diese Probleme zu reduzieren, weisen bekannte Fahrzeugprüfstände eine Schwingungsentkopplung zwischen der Basisplatte und dem Gebäude auf. Eine solche Schwingungsentkopplung reduziert die Übertragung der Schwingungen auf das Gebäude und ist grundsätzlich schon bei der Gebäudeplanung zu berücksichtigen. Eine spätere Installation einer solchen Schwingungsentkopplung ist nur mit erhöhtem Mehraufwand möglich. Beim Betrieb werden die Schwingungen des Prüfstands und des Fahrzeugs über die Basisplatte vom Gebäude entkoppelt. Störende Geräuschentwicklung, insbesondere störende Resonanzen werden reduziert. Eine Duale Nutzung verschiedener Bereiche des Gebäudes ist möglich.

Nachteilhaft bei den bekannten Lösungen ist es, dass die Gebäudeentkopplung nachträglich nicht oder nur mir hohem Aufwand installiert werden kann. Die Installation eines Fahrzeugprüfstands in bestehende Infrastruktur ist daher kaum möglich.

Es ist Aufgabe der vorliegenden Erfindung, in kostengünstiger und einfacher Weise die voranstehend beschriebenen Nachteile zumindest teilweise zu beheben.

Insbesondere ist es Aufgabe der vorliegenden Erfindung, in kostengünstiger und einfacher Weise zu ermöglichen, Fahrzeugprüfungen in bestehenden Gebäuden zu ermöglichen, ohne aufwändige Nachrüstarbeiten an der Gebäudeinfrastruktur vornehmen zu müssen.

Ferner ist es eine Aufgabe der Erfindung, eine Prüfvorrichtung bereitzustellen, die im Betrieb weniger Lärm verursacht.

Ferner ist es eine weitere Aufgabe der Erfindung, eine Prüfvorrichtung für einen Fahrzeugprüfstand bereitzustellen, bei dem im Betrieb auftretende Vibrationen geringere Schäden und geringeren Verschleiß an den Prüfvorrichtungen erzeugen.

Schließlich ist es eine weitere Aufgabe der Erfindung, eine Prüfvorrichtung für einen Fahrzeugprüfstand bereitzustellen, dessen Lebensdauer in erhöht und dessen Wartungsbedarf reduziert ist.

Die voranstehende Aufgabe wird gelöst, durch eine Prüfvorrichtung mit den Merkmalen des Anspruchs 1, einen Fahrzeugprüfstand mit den Merkmalen des Anspruchs 9 sowie ein Verfahren zum Betreiben eines Prüfstands mit den Merkmalen des Anspruchs 10.

Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Prüfvorrichtung beschrieben sind, selbstverständlich auch im Zusammenhang mit dem erfindungsgemäßen Fahrzeugprüfstand sowie dem erfindungsgemäßen Verfahren und jeweils umgekehrt, sodass bezüglich der Offenbarung zu den einzelnen Erfindungsaspekten stets wechselseitig Bezug genommen wird beziehungsweise werden kann.

Erfindungsgemäß soll eine Prüfvorrichtung nach Anspruch 1 den Betrieb eines Fahrzeugprüfstands in einem Gebäude mit einem ebenen Boden ermöglichen, bei dem im Betrieb entstehende Schwingungen und Resonanzen nicht oder nur stark reduziert auf das Gebäude übertragen werden und umgekehrt.

Gemäß einem ersten Aspekt liefert die Erfindung damit eine Prüfvorrichtung für einen Fahrzeugprüfstand zur Positionierung an einer Achse eines Prüffahrzeugs, umfassend einen Basisrahmen, eine auf einem Basisrahmen angeordnete elektrische Belastungsmaschine mit einer Lastachse zum Aufbringen eines Belastungsmoments auf eine Achse des Prüffahrzeugs; auf einer im Betrieb dem Boden zugewandten Seite des Basisrahmens angeordnete Grundplatte; wenigstens zwei zwischen dem Basisrahmen und der Grundplatte auf zwei unterschiedlichen Seiten der Lastachse und in jeweils einem Abstand senkrecht zur Lastachse angeordnete Dämpfungseinrichtungen zur Schwingungsdämpfung des Basisrahmens gegenüber der Grundplatte, eine Verschiebeeinrichtung an der Grundplatte zur Positionierung der Prüfvorrichtung in einer im Wesentlichen horizontalen Ebene, wobei eine Verbindungslinie zwischen zwei auf unterschiedlichen Seiten der Lastachse angeordneten Dämpfungseinrichtungen durch die Lastachse verläuft.

Der Erfindung liegt die überraschende Erkenntnis zugrunde, dass die Anordnung von Dämpfungseinrichtungen auf zwei unterschiedlichen Seiten der Lastachse, sodass eine Verbindungslinie zwischen den Dämpfungseinrichtungen durch die Lastachse verläuft dazu führt, dass Vibrationen der Lastachse sich nicht mehr auf eine Verschiebung der Lagerung der Lastachse auswirken, sondern lediglich eine minimale Drehbewegung in der Lastachse bewirken. Hierdurch werden auftretende Lasten und Laständerungen direkt von dem Dämpfungseinrichtungen aufgenommen, ohne dass der Prüfstand in Vibration gerät andere Schwingungen erzeugt. Durch diese Art der Konstruktion wird auch der Verschleiß an entsprechende anfälligen Bauteilen reduziert, dadurch der Wartungsbedarf reduziert und die Lebensdauer erhöht.

Eine Prüfvorrichtung ist ein technisches Mittel für Prüfungen, bei denen festgestellt wird, ob ein Prüfobjekt eine Anforderung erfüllt. Das Prüfobjekt eines Fahrzeugprüfstands ist ein Prüffahrzeug.

Der Fahrzeugprüfstand ist dazu geeignet, die Radleistung des Prüffahrzeugs zu messen. Hierzu gehört insbesondere die Messung der Drehzahl und des Drehmoments. Diese Messungen erfolgen über die elektrische Belastungsmaschine. Die elektrische Belastungsmaschine ist insbesondere ein Dynamometer, mit dem positive und negative Belastungen auf ein Rad des Prüffahrzeugs aufgebracht werden können.

Die Dämpfungseinrichtungen können unterschiedlich ausgestaltet sein. Die Dämpfungseinrichtungen können beispielsweise mechanische, elektromechanische oder elektromagnetische Dämpfungseinrichtungen sein. Insbesondere können die Dämpfungseinrichtungen Dämpfungskissen sein. Dämpfungskissen können belüftet und entlüftet werden. Die Entlüftung kann dabei über ein separates Ventil erfolgen und ebenso wie die Belüftung insbesondere elektronisch gesteuert sein. Die elektrische Belastungsmaschine dient im Betrieb eines Fahrzeugprüfstands zum Aufbringen eines Belastungsmoments auf eine Achse des Prüffahrzeugs. Hierzu weist die Belastungsmaschine eine Lastachse auf. Die Übertragung erfolgt im Betrieb durch eine entlang der Lastachse angeordnete Welle. Das Gewicht der elektrischen Belastungsmaschine von mehreren 100 Kilogramm bis über 1 t erfordert eine ausreichende Haltbarkeit der Dämpfungskisten. Hierzu sind die Dämpfungskissen aus einem widerstandsfähigen Material gefertigt. Insbesondere kann das Material der Dämpfungskissen Gummi, vorzugsweise eine Gummimischung umfassen. Derartige Dämpfungskissen sind auch unter dem Begriff der Gummiluftfedern bekannt. Durch die Anpassung des Luftdrucks kann das ein Führungsverhalten der Dämpfungskissen angepasst werden. Dämpfungskissen haben eine integrierte Dämpfung, weswegen kein separater Dämpfer bei dessen Verwendung erforderlich ist. Sie sind daher wartungsarm. Ein weiterer Vorteil von Dämpfungskissen ist, dass sie keinen Körperschall übertragen und daher besonders gut zur Lärmreduktion geeignet sind. Als Verschiebeeinrichtung kommt jede Einrichtung infrage, die eine manuelle oder automatische Verschiebung der Prüfvorrichtung ermöglicht oder vereinfacht. Eine Verbindungslinie zwischen zwei auf unterschiedlichen Seiten der Lastachse angeordneten Dämpfungseinrichtungen verläuft durch die Lastachse. Dies dient dazu, dass Vibrationen des Basisrahmens lediglich zu Rotationen der Lastachse, aber nicht Verschiebungen der Lastachse zur Folge haben. Dabei kann insbesondere auch vorgesehen sein, dass mehrere Dämpfungseinrichtungen auf jeder Seite der Lastachse vorgesehen sind und Verbindungslinien zwischen mehreren auf gleichen Seiten der Lastachse angeordneten Dämpfungseinrichtungen parallel zur Lastachse und/oder parallel zueinander verlaufen. Hierdurch wird der Effekt verstärkt. Die Grundplatte dient als mechanisches Strukturelement welches über die Dämpfungseinrichtungen mit dem Basisrahmen verbunden ist und im Betrieb zu einem Boden ausgerichtet ist. Sie muss grundsätzlich nicht plattenförmig oder ausschließlich plattenförmig sein, sondern kann auch als rahmenförmige Grundplatte ausgestaltet sein, Strukturelemente und/oder Rahmenelemente aufweisen.

Es kann Vorteile mit sich bringen, wenn die auf unterschiedlichen Seiten der Lastachse angeordneten Dämpfungseinrichtungen im Betrieb in unterschiedlichen vertikalen Abständen zum Boden angeordnet sind.

Unterschiedliche vertikale Abstände zum Boden ermöglichen eine flexiblere Anordnung der Dämpfungseinrichtungen, welche insbesondere Vorteile hinsichtlich der Bewegungsfreiheit in räumlich begrenzten Prüfräumen mit sich bringen. Die unterschiedlichen Abstände können beispielsweise derart gewählt werden, dass eine Dämpfungseinrichtung, welche in einem Schwenkbereich der Tür des Fahrzeugs angeordnet ist, eine so niedrige Höhe hat, dass die Fahrzeugtür weiterhin geöffnet werden kann. Dies kann das Ein- und Aussteigen ins Fahrzeug erleichtern oder ermöglichen, was bei auf gleicher Höhe und in Höhe der Lastachse angeordneten Dämpfungseinrichtungen generell nicht möglich ist.

Weitere Vorteile werden erreicht, wenn die Prüfvorrichtung ferner eine Verschiebeeinrichtung aufweist, wobei die Verschiebeeinrichtung vorzugsweise mehrere Schwerlastrollen umfasst.

Durch die Verschiebeeinrichtung ist neben der Positionierbarkeit der Prüfvorrichtung eine mechanische Kopplung gegenüber der Gebäudestruktur grundsätzlich anders, als wenn die Prüfvorrichtung an einem festen Ort mit dem Gebäude in Verbindung steht. Die geänderte Kopplung kann auch Auswirkungen auf das Schwingungsverhalten und Dämpfungsverhalten der Prüfvorrichtung haben.

Vorteile bringt es weiter mit sich, wenn die Verschiebeeinrichtung ein Schienensystem mit einem Längsschienenpaar und einem auf dem Längsschienenpaar verschiebbar angeordneten Querschienenpaar umfasst.

Diese Ausführungsform ermöglicht auch die Integration einer einfachen automatischen Positioniervorrichtung mit der die elektrische Belastungsmaschine gegenüber dem Prüffahrzeug mit geringem Steuerungsaufwand positioniert werden kann.

Vorteile bringt es weiter mit sich, wenn die Dämpfungseinrichtungen zur Schwingungsdämpfung gegenüber einer Gebäudestruktur, insbesondere eines Boden des Gebäudes dienen.

Eine Schwingungsentkopplung der Prüfvorrichtung gegenüber einer Gebäudestruktur dient der Dämpfung von im Betrieb bezüglich Frequenz und Amplitude besonders relevanten Schwingungen. Eine Schwingungsentkopplung gegenüber dem Boden ist dabei besonders effektiv, da der Boden gegenüber anderen Gebäudestrukturen weniger gut anzuregen ist und eine geringere Anzahl an Eigenfrequenzen aufweist. In manchen Gebäuden ist eine Schwingungsentkopplung gegenüber einem Boden jedoch nicht möglich. In diesen Fällen kann es beispielsweise notwendig sein, eine Schwingungsentkopplung über eine Wandstruktur oder eine Deckenstruktur vorzunehmen.

Vorteile bringt es weiter mit sich, wenn die Dämpfungskissen dazu eingerichtet sind, über eine gebäudeseitige Druckgasleitung belüftet zu werden.

Eine gebäudeseitige Druckgasleitung ermöglicht eine stabilere Versorgung mit Druckgas und verhindert so Ausfälle der Prüfvorrichtung.

Vorteile bringt es weiter mit sich, wenn die Dämpfungskissen mit einem Gasdruck von mehr als 5 bar, insbesondere mehr als 6 bar befüllt werden können.

Vorteile bringt es weiter mit sich, wenn die Dämpfungskissen einen Abstand von wenigstens 50 cm, insbesondere wenigstens 75 cm zur Lastachse der elektrischen Belastungsmaschine aufweisen.

Gemäß einem zweiten Aspekt liefert die Erfindung einen Fahrzeugprüfstand mit einer Prüfvorrichtung nach einem der Ansprüche 1 bis 8.

Gemäß einem dritten Aspekt liefert die Erfindung ein Verfahren zum Betreiben eines Prüfstands nach Anspruch 9, umfassen die Schritte:
a. Bereitstellen eines Prüffahrzeugs an dem Prüfstand;
b. Positionieren der Prüfvorrichtung an einer Achse des Prüffahrzeugs;
c. Koppeln einer Achse des Prüffahrzeugs mit der elektrischen Belastungsmaschine;
d. Belüften der Dämpfungskissen mit einem ersten Druck; und
e. Durchführen eines Prüflaufs mit dem Prüffahrzeug.

In besonderen Ausführungsformen der Erfindung kann der Begriff "umfassen" "bestehen aus" bedeuten.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen schematisch:
- Fig. 1-6: eine besondere Ausführungsform einer erfindungsgemäßen Prüfvorrichtung in perspektivischer Darstellung aus unterschiedlichen Perspektiven.

Die Figuren 1-6 zeigen eine besondere Ausführungsform einer erfindungsgemäßen Prüfvorrichtung 10. Konkret zeigen die Figuren 1 und 2 jeweils eine perspektivische Ansicht aus Anschlussrichtung der Lastachse 16 von schräg oben links und schräg oben rechts auf die Prüfvorrichtung 10. die Figur 3 zeigt eine Draufsicht auf die Prüfvorrichtung 10 von links, die Figur 4 zeigt eine Draufsicht auf die Prüfvorrichtung 10 von rechts. Figur 5 zeigt eine Draufsicht auf die Prüfvorrichtung 10 von vorne. Figur 6 zeigt eine perspektivische Ansicht von schräg unten links auf die Prüfvorrichtung 10.

Die Prüfvorrichtung 10 weist einen Basisrahmen 12 und eine auf dem Basisrahmen 12 angeordnete elektrische Belastungsmaschine 14 auf. Ein Belastungsmoment kann über eine Lastachse 16 der elektrischen Belastungsmaschine 12 auf eine Achse des Prüffahrzeugs (nicht dargestellt) übertragen werden. Hierzu ist eine Welle (nicht dargestellt) in einer Lagereinrichtung 17 entlang der Lastachse angeordnet.

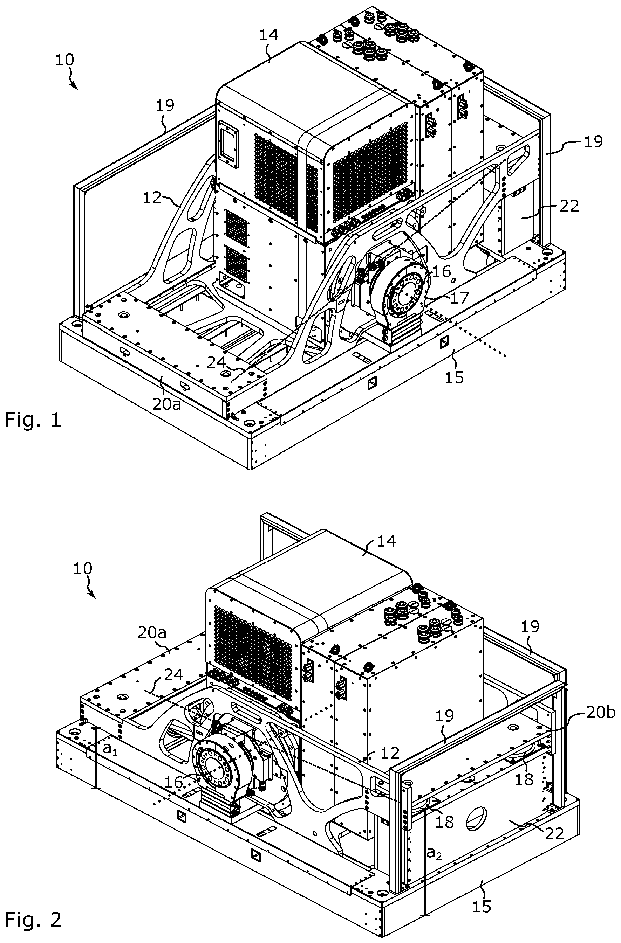

Die Richtung der Lastachse 16 ist in den Figuren 1 und 2 mit einer unterbrochenen Linie dargestellt. Hierzu wird die Lastachse 16 der elektrischen Belastungsmaschine 14 an die Achse des Prüffahrzeugs gekoppelt. Auf einer im Betrieb dem Boden zugewandten Seite des Basisrahmens 12 ist eine Grundplatte 15 angeordnet. Die Grundplatte 15 ist in dieser Ausführungsform nicht als massive Platte, sondern als Rahmenelement, welches die Funktion der Grundplatte 15 erfüllt, ausgestaltet.

Zwischen dem Basisrahmen 12 und der Grundplatte 15 sind auf zwei unterschiedlichen Seiten der Lastachse 16 und in jeweils einem Abstand senkrecht zur Lastachse 16 jeweils zwei Dämpfungseinrichtungen 18 angeordnet. Während die zwei Dämpfungseinrichtungen 18 auf der einen Seite der Lastachse 16 unter einer ersten Abstützeinrichtung 20a in einer niedrigen Höhe auf der Grundplatte 15 angeordnet sind, sind die zwei Dämpfungseinrichtungen 18 auf der anderen Seite der Lastachse 16 auf einem Träger 22 der Grundplatte 15 unter einer zweiten Abstützeinrichtung 20b angeordnet. Hierdurch sind auf unterschiedlichen Seiten der Lastachse 16 angeordneten Dämpfungseinrichtungen 18 in unterschiedlichen vertikalen Abständen a₁ < a₂ zum Boden angeordnet und stützen den Basisrahmen 12 gegenüber der Grundplatte 15 ab. Die Dämpfungseinrichtungen 18 trennen dadurch den Basisrahmen 12 und die Grundplatte 15 voneinander. Eine von der elektrischen Belastungsmaschine 14 die Grundplatte 15 übertragene Vibration wird somit zunächst von den Dämpfungseinrichtungen 18 gedämpft und nur in geringem Maße auf den Basisrahmen 12 übertragen. Auf der Grundplatte 15 ist ferner ein zweiteiliger Halterahmen 19 angeordnet. Der zweiteilige Halterahmen 19 steht nicht mit dem Basisrahmen 12 in Verbindung und dient insbesondere der manuellen Positionierung der Prüfvorrichtung 10.

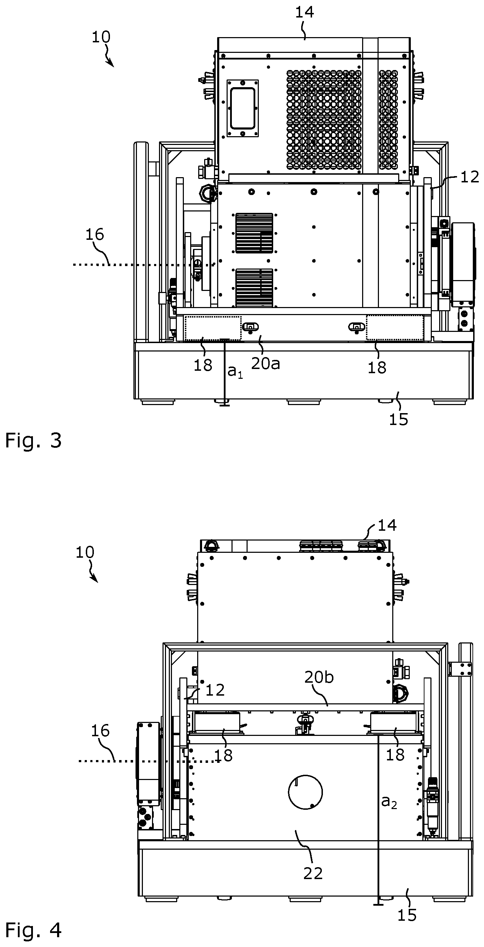

Ferner ist in den Figuren 1 bis 6 dargestellt, dass eine Verbindungslinie 24 zwischen zwei auf unterschiedlichen Seiten der Lastachse 16 angeordneten Dämpfungseinrichtungen 18 durch die Lastachse 16 verläuft. Die Lastachse 16 und die Verbindungslinie 24 stehen senkrecht aufeinander. Mit jeweils zwei auf jeder Seite der Lastachse 16 angeordneten Dämpfungseinrichtungen 18 jeweils in Richtung der Lastachse 16 werden Vibrationsbewegungen des Basisrahmens 12 in andere Richtungen als in Rotationsrichtung der Lastachse ausgeschlossen.

Durch diese Anordnung wirken sich sowohl die gedämpften Schwingungen, die auf den Basisrahmen 12 und damit die elektrische Belastungsmaschine 14 und die Lastachse 16 vom Gebäude übertragen werden, lediglich in einer minimalen Rotation der Lastachse 16 aus, als auch werden Schwingungen durch die elektrische Belastungsmaschine 14 nur minimal auf das Gebäude übertragen. Solche minimalen Rotation der elektrischen Belastungsmaschine 14 sind für die Prüfvorgänge unproblematisch. Andere Anordnungen, bei denen die Verbindungslinie 24 nicht durch die Lastachse 16 verläuft, haben auch eine minimale Verschiebung der Lastachse 16 relativ zu einem zu prüfenden Fahrzeug zufolge. Verschiebungen der Lastachse 16 sind eine der Hauptursachen für erhöhten Verschleiß. Durch die besondere erfindungsgemäße Anordnung der Dämpfungseinrichtungen 18 wird diese Ursache für erhöhten Verschleiß aufgehoben.

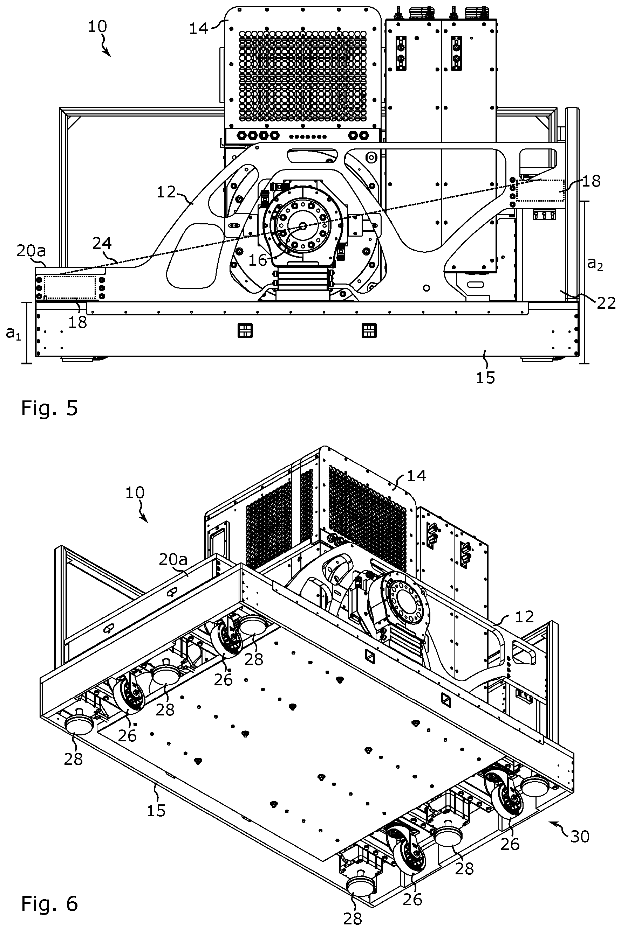

Der Verlauf der Verbindungslinie 24 durch die Lastachse 16 ist besonders deutlich in Figur 5 zu erkennen. Die Darstellung in Figur 5 zeigt die Prüfvorrichtung 10 in einer Frontansicht, wobei die Sichtachse die Lastachse 16 ist. Die Dämpfungseinrichtungen 18 sind in dieser Perspektive hinter Elementen des Basisrahmens 12 angeordnet und daher durch unterbrochene Linien eingezeichnet. Aus dieser Perspektive wird sowohl der Höhenunterschied zwischen den senkrechten Abständen a₁ und a₂ der Dämpfungseinrichtungen 18 zum Boden deutlich als auch die Lage der Verbindungslinie 24 senkrecht auf der Lastachse 16. während der Bauraum, den die Prüfvorrichtung 10 einnimmt, aus dieser Perspektive rechtsseitig von der Lastachse 16 vollständig vom Basisahmen 12 und der elektrischen Belastungsmaschine 14 eingenommen wird ist der Bauraum linksseitig von der Lastachse zum Teil freigelegt. Dies ermöglicht, diesen freigelegten Raum als Türschwenkbereich von Prüffahrzeugen zu nutzen.

Schwingungen, die im Betrieb der Prüfeinrichtung 10 über den Boden auf die Grundplatte 15 übertragen werden, werden durch die Dämpfung eines und 18 Schwingung gedämpft. Die Abstände der Dämpfungseinrichtungen 18 zur Lastachse 16 betragen in diesem Beispiel jeweils 75 cm.

Die Dämpfungseinrichtungen zu 18 sind als Dämpfungskissen ausgestaltet und sind mit Gas unter mehreren Bar Druck befüllbar. Üblicherweise sind die Dämpfungskissen derart ausgelegt, dass sie eine Befüllung von Drücken bis zu 10 bar ermöglichen. Außer mit Luft können die Dämpfungskissen auch mit anderen Gasen, beispielsweise reinem Stickstoff oder mit langsamer entlüftenden Schutzgasen wie Argon oder CO₂ befüllt werden. Die Verwendung von noch langsamer entlüftendem SF₆ ist wegen dessen sehr hohem Treibhauspotenzials zu vermeiden.

In Figur 6 ist eine perspektivische Ansicht von links unten unter die Prüfvorrichtung 10 gezeigt. An der Grundplatte 15 sind mehrere Schwerlastrollen 26 als Verschiebeeinrichtung 30 angeordnet. Die Verschiebeeinrichtung 30 dient zur Positionierung der Prüfvorrichtung 10 in einer im Wesentlichen horizontalen Ebene.

Neben den Schwerlastrollen 26 sind an der Unterseite der Prüfvorrichtung 10 mehrere Hydraulikstempel 28 angeordnet. Sobald die Prüfvorrichtung 10 in einer Prüfposition positioniert ist, können die Hydraulikstempel 28 derart gesenkt werden, dass die Prüfvorrichtung 10 mit den Schwerlastrollen 26 um wenige Millimeter angehoben wird. Hierdurch kann ein Verschieben der Prüfvorrichtung 10 aus der Prüfposition verhindert werden.

Ein Prüfstand ließe sich beispielsweise in einfacher Weise auf einer planen Ebene mit vier in einem Karree angeordneten Prüfvorrichtungen 10 gemäß dieser Ausführungsform konstruieren. Die Ebene sollte ausreichend plan sein, um die Prüfvorrichtung in 10 in ihre jeweiligen Prüfposition verschieben zu können. Eine gewisse Rauigkeit, wie sie beispielsweise bei planen Böden aus Baumaterialien wie Beton besteht, ist grundsätzlich tolerierbar.

Die voranstehenden Erläuterungen zu den Ausführungsformen beschreiben die vorliegende Erfindung ausschließlich im Rahmen von Beispielen.

### Bezugszeichenliste

- 10: Prüfvorrichtung
- 12: Basisrahmen
- 14: elektrische Belastungsmaschine
- 15: Grundplatte
- 16: Lastachse
- 17: Lagereinrichtung
- 18: Dämpfungskissen
- 19: Halterahmen
- 20a: erste Abstützeinrichtung
- 20b: zweite Abstützeinrichtung
- 22: Träger
- 24: Verbindungslinie zwischen zwei auf unterschiedlichen Seiten der Lastachse angeordneten Dämpfungseinrichtungen
- 26: Schwerlastrolle
- 28: Hydraulikstempel
- 30: Verschiebeeinrichtung

- a₁, a₂: Abstände zum Boden

## Patentansprüche

1. Prüfvorrichtung (10) für einen Fahrzeugprüfstand zur Positionierung an einer Achse eines Prüffahrzeugs, umfassend:
einen Basisrahmen (12),
eine auf dem Basisrahmen (12) angeordnete elektrische Belastungsmaschine (14) mit einer Lastachse (16) zum Aufbringen eines Belastungsmoments auf eine Achse des Prüffahrzeugs;
auf einer im Betrieb dem Boden zugewandten Seite des Basisrahmens (12) angeordnete Grundplatte (15);
**dadurch gekennzeichnet, dass** es weiter umfasst:
zwischen dem Basisrahmen (12) und der Grundplatte (15) auf zwei unterschiedlichen Seiten der Lastachse (16) und in jeweils einem Abstand senkrecht zur Lastachse (16) angeordnete Dämpfungseinrichtungen (18) zur Schwingungsdämpfung des Basisrahmens (12) gegenüber der Grundplatte, wobei eine Verbindungslinie (24) zwischen zwei auf unterschiedlichen Seiten der Lastachse (16) angeordneten Dämpfungseinrichtungen (18) durch die Lastachse (16) verläuft.

2. Prüfvorrichtung (10) nach Anspruch 1, wobei die auf unterschiedlichen Seiten der Lastachse (16) angeordneten Dämpfungseinrichtungen (18) im Betrieb in unterschiedlichen vertikalen Abständen (a₁, a₂) zum Boden angeordnet sind.

3. Prüfvorrichtung (10) nach einem der vorhergehenden Ansprüche, ferner umfassend eine Verschiebeeinrichtung (30), wobei die Verschiebeeinrichtung (30) vorzugsweise mehrere Schwerlastrollen (28) umfasst.

4. Prüfvorrichtung (10) nach Anspruch 3, wobei die Verschiebeeinrichtung (30) ein Schienensystem mit einem Längsschienenpaar und einem auf dem Längsschienenpaar verschiebbar angeordneten Querschienenpaar umfasst.

5. Prüfvorrichtung (10) nach einem der vorhergehenden Ansprüche, wobei die Dämpfungseinrichtungen (18) zur Schwingungsdämpfung gegenüber einer Gebäudestruktur, insbesondere eines Boden des Gebäudes dienen.

6. Prüfvorrichtung (10) nach einem der vorhergehenden Ansprüche, wobei die Dämpfungseinrichtungen (18) aufblasbare Dämpfungskissen sind oder umfassen.

7. Prüfvorrichtung (10) nach Anspruch 6, wobei die Dämpfungseinrichtungen (18) mit einem Gasdruck von mehr als 5 bar, insbesondere mehr als 6 bar befüllbar sind.

8. Prüfvorrichtung (10) nach einem der vorhergehenden Ansprüche, wobei die Dämpfungseinrichtungen (18) einen Abstand von wenigstens 50 cm, insbesondere wenigstens 75 cm zur Lastachse (16) der elektrischen Belastungsmaschine (14) aufweisen.

9. Fahrzeugprüfstand mit einer Prüfvorrichtung (10) nach einem der vorhergehenden Ansprüche.

10. Verfahren zum Betreiben eines Fahrzeugprüfstands nach Anspruch 9, umfassend die Schritte:
a. Bereitstellen eines Prüffahrzeugs an dem Fahrzeugprüfstand;
b. Positionieren der Prüfvorrichtung (10) an einer Achse des Prüffahrzeugs;
c. Koppeln einer Achse des Prüffahrzeugs mit der elektrischen Belastungsmaschine (14);
d. Belüften der Dämpfungseinrichtungen (18) mit einem ersten Druck; und
e. Durchführen eines Prüflaufs mit dem Prüffahrzeug.

## Claims

1. Testing device (10) for a vehicle test bench for positioning at an axle of a test vehicle, comprising: a base frame (12), an electric load machine (14) arranged on the base frame (12) and having a load axis (16) for applying a load torque to an axle of the test vehicle; a base plate (15) arranged at a side of the base frame (12) which faces the ground during operation; **characterised in that** it further comprises: damping devices (18) arranged between the base frame (12) and the base plate (15) on two different sides of the load axis (16) and each at a distance perpendicular to the load axis (16) for damping vibrations of the base frame (12) relative to the base plate, wherein a connection line (24) between two damping devices (18) arranged on different sides of the load axis (16) passes through the load axis (16).

2. Test apparatus (10) according to claim 1, wherein the damping devices (18) arranged on different sides of the load axis (16) are, in operation, arranged at different vertical distances (a1, a2) from the floor.

3. Test apparatus (10) according to one of the preceding claims, further comprising a displacement device (30), wherein the displacement device (30) preferably comprises a plurality of heavy-duty rollers (28).

4. Test apparatus (10) according to claim 3, wherein the displacement device (30) comprises a rail system with a pair of longitudinal rails and a pair of transverse rails arranged so as to be displaceable on the pair of longitudinal rails.

5. Test apparatus (10) according to one of the preceding claims, wherein the damping devices (18) serve to dampen vibrations relative to a building structure, in particular a floor of the building.

6. Test apparatus (10) according to one of the preceding claims, wherein the damping devices (18) are or comprise inflatable damping cushions.

7. Test apparatus (10) according to claim 6, wherein the damping devices (18) can be filled with a gas pressure of more than 5 bar, in particular more than 6 bar.

8. Test apparatus (10) according to any of the preceding claims, wherein the damping devices (18) are spaced at least 50 cm, in particular at least 75 cm, from the load axis (16) of the electric load machine (14).

9. Vehicle test bench comprising a test device (10) according to one of the preceding claims.

10. Method for operating a vehicle test bench according to claim 9, comprising the steps of:
a. providing a test vehicle at the vehicle test bench;
b. positioning the test device (10) at an axle of the test vehicle;
c. coupling an axle of the test vehicle to the electric load machine (14);
d. pressurising the damping devices (18) to a first pressure; and
e. performing a test run with the test vehicle.

## Revendications

1. Dispositif d'essai (10) destiné à un banc d'essai pour véhicules, destiné à être positionné sur un essieu d'un véhicule d'essai, comprenant : un châssis de base (12), une machine de charge électrique (14) disposée sur le châssis de base (12) et comportant un axe de charge (16) destiné à appliquer un couple de charge sur un essieu du véhicule d'essai ; une plaque de base (15) disposée sur un côté du châssis de base (12) tourné vers le sol en fonctionnement ; **caractérisé en ce qu'**il comprend en outre : des dispositifs d'amortissement (18) disposés entre le châssis de base (12) et la plaque de base (15) sur deux côtés différents de l'axe de charge (16) et à une distance respective perpendiculaire à l'axe de charge (16) pour amortir les vibrations du châssis de base (12) par rapport à la plaque de base, une ligne de jonction (24) entre deux dispositifs d'amortissement (18) disposés de part et d'autre de l'axe de charge (16) passant par l'axe de charge (16).

2. Dispositif d'essai (10) selon la revendication 1, dans lequel les dispositifs d'amortissement (18) disposés de part et d'autre de l'axe de charge (16) sont, en fonctionnement, situés à des distances verticales différentes (a1, a2) par rapport au sol.

3. Dispositif d'essai (10) selon l'une des revendications précédentes, comprenant en outre un dispositif de déplacement (30), le dispositif de déplacement (30) comprenant de préférence plusieurs roulettes pour charges lourdes (28).

4. Dispositif d'essai (10) selon la revendication 3, dans lequel le dispositif de déplacement (30) comprend un système de rails comportant une paire de rails longitudinaux et une paire de rails transversaux disposés de manière coulissante sur la paire de rails longitudinaux.

5. Dispositif d'essai (10) selon l'une des revendications précédentes, dans lequel les dispositifs d'amortissement (18) servent à amortir les vibrations par rapport à une structure de bâtiment, en particulier un sol du bâtiment.

6. Dispositif d'essai (10) selon l'une des revendications précédentes, dans lequel les dispositifs d'amortissement (18) sont ou comprennent des coussins d'amortissement gonflables.

7. Dispositif d'essai (10) selon la revendication 6, dans lequel les dispositifs d'amortissement (18) peuvent être gonflés à une pression de gaz supérieure à 5 bars, en particulier supérieure à 6 bars.

8. Dispositif d'essai (10) selon l'une des revendications précédentes, dans lequel les dispositifs d'amortissement (18) sont situés à une distance d'au moins 50 cm, en particulier d'au moins 75 cm, de l'axe de charge (16) de la machine de charge électrique (14).

9. Banc d'essai pour véhicules comprenant un dispositif d'essai (10) selon l'une des revendications précédentes.

10. Procédé d'exploitation d'un banc d'essai pour véhicules selon la revendication 9, comprenant les étapes suivantes :
a. mise à disposition d'un véhicule d'essai sur le banc d'essai pour véhicules ;
b. positionnement du dispositif d'essai (10) sur un essieu du véhicule d'essai ;
c. coupler un essieu du véhicule d'essai à la machine de charge électrique (14) ;
d. alimenter les dispositifs d'amortissement (18) avec une première pression ; et
e. effectuer un essai avec le véhicule d'essai.
